# FASCICULE DE BREVET EUROPEEN

(11) **EP 3 732 386 B1**
(45) Date de publication et mention de la délivrance du brevet: **07.06.2023**
(21) Numéro de dépôt: 18836266.9
(22) Date de dépôt: 27.12.2018
(51) Int. Cl.: F16L 11/08, F16L 33/01, G01M 5/00

(54) **EMBOUT DE CONNEXION D'UNE LIGNE FLEXIBLE, PROCÉDÉ DE FABRICATION ET MÉTHODE DE SURVEILLANCE ASSOCIÉS**
ANSCHLUSSSPITZE FÜR EINE FLEXIBLE LEITUNG SOWIE ZUGEHÖRIGES HERSTELLUNGSVERFAHREN UND ÜBERWACHUNGSVERFAHREN
CONNECTION TIP FOR A FLEXIBLE LINE, AND ASSOCIATED MANUFACTURING PROCESS AND MONITORING METHOD

(30) Priorité: 29.12.2017 FR 1763384
(43) Date de publication de la demande: 04.11.2020
(73) Titulaire: Technip N-Power, 92400 Courbevoie (FR)
(72) Inventeur: ROCHER MONNIER, Pierre, 76940 LA MAILLERAYE SUR SEINE (FR); BOURGET, Jean-Christophe, 29470 PLOUGASTEL (FR); CHAUDET, Guillaume, 76130 MONT SAINT AIGNAN (FR); LEMBEYE, Philippe, 76380 MONTIGNY (FR)
(74) Mandataire: Lavoix
(86) Numéro de dépôt international: PCT/EP2018/097020
(87) Numéro de publication internationale: WO 2019/129806

(56) Documents cités:
- EP-A2- 2 489 824
- WO-A1-03/071179
- WO-A1-2016/170360
- FR-A1- 2 214 852

## Description

La présente invention concerne un embout de connexion d'une ligne flexible de transport de fluide, selon le préambule de la revendication 1.

Un tel embout est destiné notamment à la surveillance de l'intégrité des couches de la ligne, en particulier des couches d'armure de traction de la ligne flexible.

La ligne flexible est avantageusement une conduite flexible de type non liée (« unbonded » en anglais) destinée au transport d'hydrocarbures à travers une étendue d'eau, tel qu'un océan, une mer, un lac ou une rivière. En variante, la ligne flexible est un ombilical renforcé par des éléments d'armure ou encore un câble.

Une telle conduite flexible est par exemple réalisée suivant les documents normatifs APl 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Certaines de ces conduites sont utilisées dans des conditions très sévères. Ainsi, les hydrocarbures transportés peuvent présenter une pression et une température très élevées, par exemple une pression comprise entre 500 bars et 1000 bars, et une température comprise entre 110°C et 130°C. De plus, dans le cas où la conduite est immergée à grande profondeur, celle-ci doit être capable de résister à une pression externe très élevée, par exemple de l'ordre de 250 bars si la conduite est immergée à 2500 mètres de profondeur.

Les conduites destinées aux grandes profondeurs doivent aussi résister aux très fortes tensions, couramment plusieurs dizaines de tonnes, auxquelles elles sont soumises en service et/ou lors de leur installation en mer.

En outre, dans le cas où l'ensemble de surface est flottant et mobile en fonction des conditions de mer, les conduites montantes (« risers » en anglais) reliant le fond marin à l'ensemble de surface peuvent parfois être soumises à des millions de cycles de variation de courbure. Ces conduites montantes doivent donc aussi être capables de résister durablement à des sollicitations dynamiques en fatigue.

Les embouts de connexion, qui sont particulièrement sollicités, doivent eux aussi être conçus pour résister à de telles conditions de service.

En particulier, les éléments d'ancrage des armures de traction dans l'embout de connexion supérieur des conduites montantes sont soumis à de fortes sollicitations susceptibles d'engendrer un phénomène de fatigue de ces éléments d'ancrage, voire une rupture des armures au niveau du crochet ou de la zone arrière de l'embout.

Il est donc important de surveiller les armures de traction dans les embouts de connexion des conduites flexibles montantes, afin de détecter une éventuelle rupture d'ancrage d'un ou plusieurs fils.

Pour résoudre ce problème, EP 2 489 824 décrit un système comprenant une chambre d'inspection ménagée dans la partie arrière d'un embout et accessible à travers une fenêtre. Un tel système permet de contrôler visuellement ou par l'intermédiaire de dispositifs de contrôle l'intégrité de la couche externe des armures de traction au niveau de la partie arrière de l'embout à l'arrière de leur zone d'ancrage dans l'embout. Un tel système est dénommé en anglais « spy hole ».

Cependant, une telle chambre d'inspection ne permet pas d'inspecter la partie avant de l'embout et donc la zone d'ancrage des éléments d'armure dans la chambre de réception. En outre, seule la couche d'armures externe est accessible, les couches d'armures internes étant masquées par la couche d'armures externe.

Un but de l'invention est donc de s'assurer plus précisément de l'intégrité des couches d'armures internes et externes de traction, ainsi que de leur tenue en fatigue dans la zone d'ancrage des éléments d'armure.

À cet effet, l'invention a pour objet un embout du type précité, et comprenant les caractéristiques de la partie caractérisante de la revendication 1.

L'embout selon l'invention peut comprendre l'une ou plusieurs des caractéristiques des revendications 2 à 9, prise(s) isolément ou suivant toute combinaison techniquement possible.

L'invention a aussi pour objet un procédé de fabrication selon la revendication 10.

Le procédé de fabrication selon l'invention peut comprendre l'une ou plusieurs des caractéristiques des revendications 11 à 13 et la caractéristique suivante, prise(s) isolément ou suivant toute combinaison techniquement possible :
- au moins un module de surveillance est installé dans la chambre de réception, le module de surveillance étant disposé dans la deuxième région

L'invention a également pour objet une méthode de surveillance selon la revendication 14.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'un tronçon central d'une conduite flexible destinée à être connectée à un embout selon l'invention,
- la figure 2 est une vue, prise en demi-coupe suivant un plan axial médian, d'un embout de la conduite de la figure 1 selon un premier mode de réalisation de l'invention,
- la figure 3 est une vue analogue à celle de la figure 2 d'un embout selon un deuxième mode de réalisation de l'invention,
- la figure 4 est une vue analogue à celle de la figure 2 d'un embout selon un troisième mode de réalisation de l'invention,
- la figure 5 est une vue analogue à celle de la figure 2 d'un embout selon un quatrième mode de réalisation de l'invention,
- la figure 6 est une vue analogue à celle de la figure 2 d'un embout selon un cinquième mode de réalisation de l'invention,
- la figure 7 est une vue analogue à celle de la figure 2 d'un embout selon un sixième mode de réalisation de l'invention,
- les figures 8 à 12 sont des vues en demi-coupe selon un plan axial d'un embout de la conduite de la figure 1, correspondant à cinq étapes d'un premier procédé de fabrication de l'embout, et
- les figures 13 à 19 sont des vues en demi-coupe selon un plan axial d'un embout de la conduite de la figure 1, correspondant à sept étapes d'un deuxième procédé de fabrication de l'embout.

Dans tout ce qui suit, les termes « extérieur » et « intérieur » s'entendent généralement de manière radiale par rapport à un axe X-X' de la conduite, le terme « extérieur » s'entendant comme relativement plus éloigné radialement de l'axe X-X' et le terme « intérieur » s'étendant comme relativement plus proche radialement de l'axe X-X' de la conduite.

Les termes « avant » et « arrière » s'entendent de manière axiale par rapport à un axe X-X' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

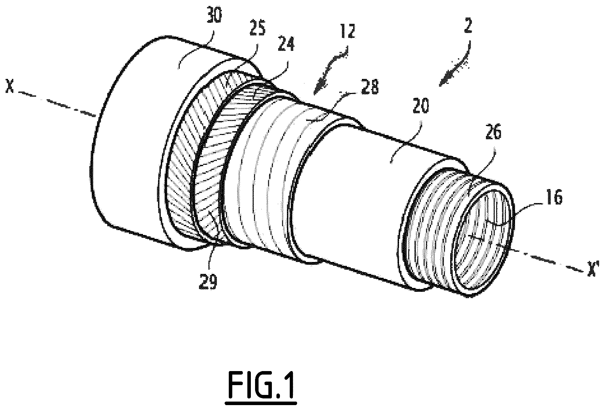

Un premier exemple de ligne flexible 2 est illustré partiellement sur la figure 1. Dans l'exemple décrit ci-après, la ligne flexible 2 est une conduite flexible. En variante, la ligne flexible 2 est un câble ou un ombilical.

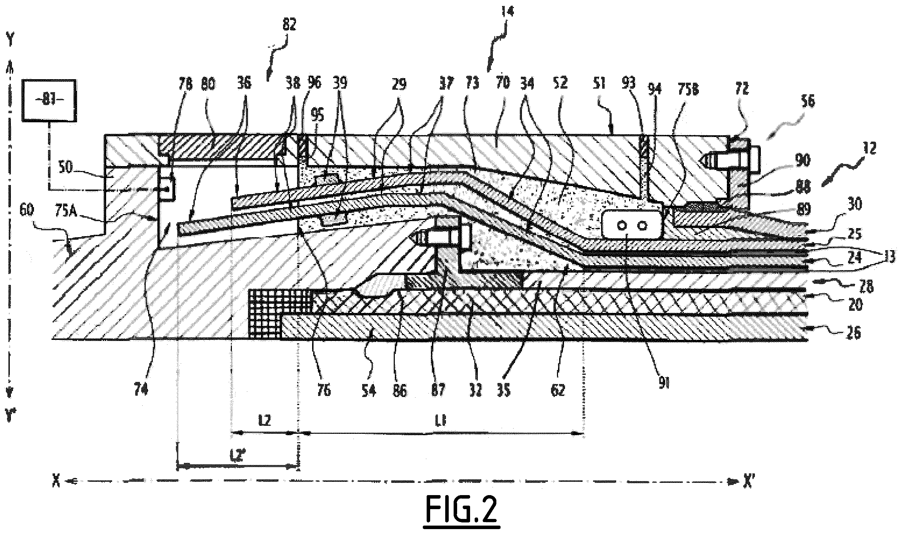

La conduite flexible 2 comporte un tronçon central 12 illustré en partie sur la figure 1. Elle comporte, à chacune des extrémités axiales du tronçon central 12, un embout d'extrémité 14 dont les parties pertinentes sont représentées sur les figures 2 à 19. Sur les figures 2 à 19, outre l'embout 14, est représentée une partie du tronçon central 12 adjacente à l'embout 14.

En référence à la figure 1, la conduite 2 délimite un passage central 16 de circulation d'un fluide, avantageusement d'un fluide pétrolier. Le passage central 16 s'étend suivant un axe X-X', entre l'extrémité amont et l'extrémité aval de la conduite 2. Il débouche à travers les embouts 14.

Dans tout ce qui suit, on définit, également, un axe radial Y-Y' perpendiculaire à l'axe X-X' et situé dans un plan axial médian de la conduite 2, comme visible sur la figure 2.

La conduite flexible 2 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 2.

La conduite flexible 2 est de préférence une conduite « non liée » (désignée par le terme anglais « unbonded »).

Au moins deux couches adjacentes de la conduite flexible 2 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 2 délimite une pluralité de couches concentriques autour de l'axe X-X', qui s'étendent continûment le long du tronçon central 12 jusqu'aux embouts 14 situés aux extrémités de la conduite.

Dans les exemples illustrés par les figures 1 à 19, la conduite 2 comporte au moins une première gaine tubulaire 20 à base de matériau polymère constituant avantageusement une gaine de pression.

La conduite 2 comporte, en outre, au moins une couche d'armures de traction 24, 25 disposée extérieurement par rapport à la première gaine 20 formant une gaine de pression.

Dans les exemples illustrés par les figures 1 à 19, la conduite 2 comporte en outre une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 2.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La gaine de pression 20 comporte un tronçon d'extrémité 32 inséré dans l'embout 14.

La carcasse 26 est formée par exemple d'un feuillard métallique profilé, enroulé en spirale. Les spires du feuillard sont avantageusement agrafées les unes aux autres. La fonction principale de la carcasse 26 est de reprendre les efforts radiaux d'écrasement.

La carcasse 26 est ici totalement métallique.

Dans cet exemple, la carcasse 26 est disposée à l'intérieur de la gaine de pression 20. La conduite est alors désignée par le terme anglais « rough bore » en raison de la géométrie de la carcasse 26.

La carcasse 26 est propre à entrer en contact avec le fluide circulant dans la gaine de pression 20.

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

La fonction principale de la voûte de pression 28 est de reprendre les efforts radiaux liés à la pression régnant à l'intérieur de la gaine de pression 20. La voûte de pression 28 est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La voûte de pression 28 présente une région d'extrémité 35 insérée dans l'embout 14, à l'extérieur du tronçon d'extrémité 32 de la gaine de pression 20. Le tronçon d'extrémité 32 de la gaine de pression 20 s'étend axialement vers l'avant au-delà de la région d'extrémité 35 de la voûte de pression 28.

La conduite flexible 2 selon l'invention comprend au moins une couche d'armures 24, 25 formée d'un enroulement hélicoïdal d'au moins un élément d'armure 29 allongé.

Dans les exemples représentés sur les figures 1 à 19, la conduite flexible 2 comporte une pluralité de couches d'armures 24, 25, notamment une couche d'armures intérieure 24, appliquée sur la voûte de pression 28 et une couche d'armures extérieure 25 autour de laquelle est disposée la gaine extérieure 30.

Chaque couche d'armures 24, 25 comporte des éléments d'armure 29 longitudinaux enroulés à pas long autour de l'axe X-X' de la conduite.

Par « enroulé à pas long », on entend que la valeur absolue de l'angle d'hélice est inférieure à 60°, et est typiquement comprise entre 25° et 55°.

La fonction principale des couches d'armures 24, 25 est de reprendre les efforts axiaux de traction exercés sur la conduite 2, notamment ceux liés au poids pendu dans le cas d'une conduite montante,

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier ferromagnétique, ou par des rubans en matériau composite, par exemple des rubans renforcés de fibres de carbone. Dans les exemples représentés sur les figures 2 à 19, les éléments d'armure 29 sont, par exemple, formés par des fils métalliques en acier ferromagnétique. Les éléments d'armure 29 sont donc magnétisables, c'est-à-dire constitués d'un métal capable de s'aimanter et de conserver une aimantation rémanente après aimantation.

Les éléments d'armure 29 présentent chacun un tronçon d'extrémité 34 introduit dans l'embout 14. Le tronçon d'extrémité 34 s'étend jusqu'à une extrémité libre 36 disposée dans l'embout 14. Il présente avantageusement une trajectoire pseudo-hélicoïdale d'axe X-X' dans l'embout 14, l'hélice s'enroulant sur une enveloppe conique.

Dans les exemples représentés sur les figures 2 à 19, pour chaque couche d'armures 24, 25, les tronçons d'extrémité 34 des éléments d'armure 29 s'étendent de manière divergente à l'écart de l'axe X-X', puis convergente vers l'axe X-X' depuis un point de décollement arrière 62 vers l'extrémité avant libre 36.

Dans le premier mode de réalisation illustré sur la figure 2, chaque tronçon d'extrémité 34 présente une première partie arrière 37 de fixation de l'élément d'armure s'étendant à l'arrière de l'embout 14 pour être noyée dans un matériau de remplissage et une deuxième partie avant 38 de surveillance de l'élément d'armure 29, située dans un volume libre à l'avant de l'embout 14 et définissant l'extrémité libre 36 du tronçon d'extrémité 34.

La longueur de la première partie 37 est, par exemple, comprise entre 20 centimètres (cm) et 100 cm, préférentiellement comprise entre 30 cm et 80 cm. La longueur de la deuxième partie 38 est, par exemple, comprise entre 1 cm et 30 cm, préférentiellement comprise entre 5 cm et 20 cm.

Dans le premier mode de réalisation illustré sur la figure 2, chaque tronçon d'extrémité 34 comporte, en outre, une saillie radiale d'ancrage 39, rapportée sur la première partie 37 du tronçon d'extrémité 34 à sa limite avec la deuxième partie 38 du tronçon d'extrémité 34. La saillie 39 est un élément assurant l'ancrage de l'élément d'armure 29 correspondant. La saillie 39 est rapportée sur l'élément d'armure 29 par soudage, collage ou encore brasage.

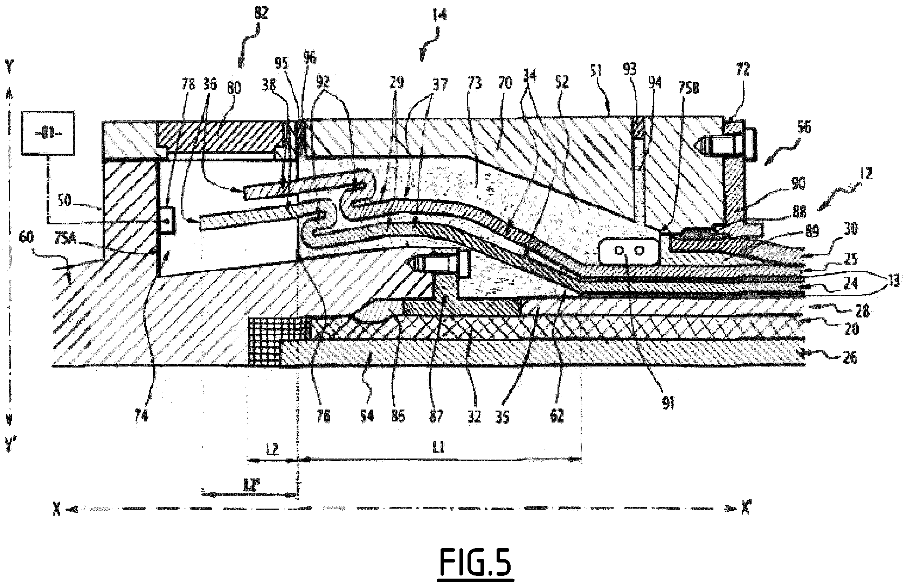

Dans les exemples illustrés par les figures 2 et 5, des couches anti-usure 13 sont intercalées entre d'une part la voûte de pression 28 et la couche interne d'armures 24, et d'autre part entre les deux couches d'armures 24, 25. Les couches anti-usure 13 comprennent, par exemple, une ou plusieurs bandes polymériques enroulées à pas court. Les couches anti-usure 13 ont pour fonction d'empêcher les deux couches métalliques d'armure 24, 25 adjacentes de frotter l'une contre l'autre et donc de s'user.

En référence aux figures 1 à 19, la gaine externe 30 est destinée à empêcher la perméation de fluide depuis l'extérieur de la conduite flexible 2 vers l'intérieur. Elle est avantageusement réalisée en matériau polymère, notamment à base d'un polyoléfine, tel que du polyéthylène, ou à base d'un polyamide, tel que du PA11 ou du PA12.

L'épaisseur de la gaine externe 30 est par exemple comprise entre 5 mm et 15 mm.

Comme illustré par les figures 2 à 19, outre le tronçon d'extrémité 32 de la gaine de pression 20, les tronçons d'extrémité 34 des éléments d'armure 29, et la région d'extrémité 35 de la voûte de pression 28, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 34 des éléments d'armure 29, et de la région d'extrémité 35 de la voûte 28.

L'embout 14 comporte, en outre, à l'arrière de la chambre de réception 52, un ensemble avant 54 d'étanchéité autour de la gaine de pression 20 et un ensemble arrière 56 d'étanchéité autour de la gaine extérieure 30.

Dans cet exemple, la voûte d'extrémité 50 est destinée à raccorder la conduite 2 à un autre embout de connexion 14 ou à des équipements terminaux, avantageusement par l'intermédiaire d'une bride d'extrémité 60.

La voûte d'extrémité 50 présente un alésage central destiné à recevoir l'extrémité de la gaine de pression 20 et à permettre l'écoulement du fluide circulant à travers le passage central 16 vers l'extérieur de la conduite 2.

Le capot 51 comporte une paroi périphérique 70 tubulaire s'étendant autour de l'axe X-X'. La paroi périphérique 70 présente un bord arrière 72 s'étendant axialement vers l'arrière au-delà de la voûte d'extrémité 50.

Le capot 51 délimite la chambre 52 radialement vers l'extérieur. La voûte d'extrémité 50 et le tronçon d'extrémité 32 de la gaine de pression 20 délimitent la chambre 52 radialement vers l'intérieur.

L'ensemble avant 54 d'étanchéité et le tronçon d'extrémité 35 de la voûte de pression 28 sont reçus dans la chambre 52 radialement vers l'intérieur par rapport aux éléments d'armure 29. Une face arrière 75A de la voûte d'extrémité 50 délimite axialement la chambre 52 vers l'avant. L'ensemble arrière d'étanchéité 56 et une face arrière 75B du capot 51 délimitent axialement la chambre 52 vers l'arrière. Une bague 91 de maintien des éléments d'armure 29 pendant le montage de l'embout est située à l'arrière de la chambre 52.

Selon l'invention, la chambre de réception 52 comporte depuis l'arrière vers l'avant une première région 73 d'ancrage de chaque tronçon d'extrémité 34 des éléments d'armure 29 et une deuxième région 74 de surveillance de chaque tronçon d'extrémité 34.

La première région 73 est remplie d'un matériau de remplissage. Le matériau de remplissage est par exemple une résine époxy telle qu'une résine Araldite^{®}.

La première région 73 s'étend axialement selon l'axe X-X' depuis l'ensemble d'étanchéité 56 jusqu'à une surface de séparation 76 définie par le matériau de remplissage.

La longueur de la première région 73 selon l'axe X-X' est, par exemple, comprise entre 20 cm et 80 cm.

Dans le premier mode de réalisation illustré sur la figure 2, la première partie 37 et la saillie radiale 39 de chaque tronçon d'extrémité 34 sont ancrées dans le matériau de remplissage présent dans la première région 73.

La saillie radiale 39 empêche le glissement axial des tronçons d'extrémité 34 dans le matériau de remplissage.

La deuxième région 74 est remplie d'un gaz tel que de l'air. La deuxième région 74 est dépourvue de matériau de remplissage.

La deuxième région 74 est disposée à l'avant de la première région 73.

La deuxième région 74 s'étend axialement selon l'axe X-X' depuis la surface de séparation 76 jusqu'à la face arrière 75A de la voûte d'extrémité 50. La longueur de la deuxième région 74 selon l'axe X-X' est avantageusement inférieure à la longueur de la première région 73. La longueur de la deuxième région 74 est, par exemple, comprise entre 5 cm et 30 cm.

Dans le premier mode de réalisation illustré sur la figure 2, la deuxième partie 38 de chaque tronçon d'extrémité 34 fait saillie dans la deuxième région 74 de la chambre de réception 52. La longueur minimale de chaque tronçon d'extrémité 34 dans la deuxième région 74 est égale à 1 cm, préférentiellement 5 cm.

En outre, comme illustré sur la figure 2, lorsque la ligne flexible 2 comporte au moins deux couches d'armures 24, 25, les extrémités des tronçons 34 des éléments d'armure 29 de chaque couche d'armures 24 intérieure sont décalées suivant l'axe central X-X' par rapport aux extrémités des tronçons 34 des éléments d'armure 29 de la couche d'armures 25 situés plus à l'extérieur.

Ainsi, les deuxièmes parties 38 de chaque tronçon d'extrémité 34 sont de longueurs différentes les unes des autres.

Ainsi, comme illustré sur la figure 2, la deuxième partie 38 associée à la couche d'armures interne 24 a une longueur L2' plus grande que la longueur L2 de la deuxième partie 38 associée à la couche d'armures externe 25. La longueur L2' est par exemple égale à14 cm et la longueur L2 égale à 7 cm. Un tel décalage permet ainsi d'avoir accès depuis l'extérieur aux couches d'armures internes 24 qui ne sont dès lors plus intégralement recouvertes par la couche d'armures externe 25.

Dans ce premier mode de réalisation, le capot 51 comporte une trappe 80 permettant d'accéder directement à l'intérieur de la deuxième région 74 de la chambre de réception. La trappe 80 fait face à la deuxième région 74 de la chambre de réception 52. La trappe 80 comporte un couvercle amovible ou une porte étanche permettant son ouverture et sa fermeture, tout en assurant son étanchéité en position fermée. En outre, avantageusement, la deuxième région 74 de la chambre de réception 52 comprend un module de surveillance 78 de chaque tronçon d'extrémité 34 raccordé électriquement à une unité de traitement 81. L'embout 14, la trappe 80 et/ou le module de surveillance 78 et l'unité de traitement 81 forment ainsi un système de suivi 82 de l'intégrité des éléments d'armure 29 de la conduite flexible 2. La trappe 80 est avantageusement utilisée pour introduire et/ou remplacer le module de surveillance 78.

Selon une variante, la trappe 80 est en partie transparente et comporte une zone d'inspection visuelle réalisée en un matériau transparent, tel que du verre ou du plexiglas pour visualiser, ce qui permet d'inspecter les éléments d'armure 29 situés dans la deuxième région 74 de la chambre de réception 52. Optionnellement, une mire est collée sur les éléments d'armure 29 afin de faciliter la visualisation d'un déplacement de ces éléments d'armure 29.

Le module de surveillance 78 est situé en vis-à-vis des tronçons d'extrémité 34 dans la deuxième région 74 de la chambre de réception. Le module de surveillance 78 est éventuellement connecté à chaque tronçon d'extrémité 34. Le module de surveillance 78 est, en outre, raccordé à l'unité de traitement 81 permettant de traiter les données en provenance du module de surveillance 78.

Le module de surveillance 78 comprend au moins un élément choisi parmi une caméra, un capteur de mesure de déplacements, un capteur ultrasonore, un capteur à fibre optique, un capteur magnétique, un réflectomètre électrique, un analyseur d'impédance, un capteur de détection de gaz et/ou de liquide.

Lorsque le module de surveillance 78 comprend une caméra, la caméra est disposée en vis-à-vis des extrémités des éléments d'armure 29 dans la deuxième région 74 de la chambre de réception 56 de sorte à filmer les éventuels déplacements des éléments d'armure 29. Optionnellement, une mire est collée sur les éléments d'armure 29 afin de faciliter la visualisation d'un déplacement de ces éléments d'armure 29. En fonctionnement normal, les extrémités libres 36 des éléments d'armure 29 dans la deuxième région 74 sont quasiment immobiles par rapport aux parois de la deuxième région 74. La détection d'un déplacement anormal, notamment d'un déplacement parallèle à l'axe longitudinal d'un élément d'armure 29 peut permettre de détecter la dégradation de l'ancrage de cet élément d'armure 29 dans l'embout 14.

Un capteur de mesure de déplacements, avantageusement un capteur LVDT (abréviation de l'anglais *Linear Variable Differential Transformer*)*,* est un capteur électrique de mesure de déplacements linéaires. Lorsque le module de surveillance 78 comprend des capteurs LVDT, ceux-ci sont avantageusement installés entre, d'une part, les extrémités libres 36 des éléments d'armure 29 à surveiller, et d'autre part, la face arrière 75A de la voûte d'extrémité 50 située dans la deuxième région 74 de la chambre de réception 52. Cet agencement permet notamment de surveiller les déplacements relatifs des extrémités libres 36 des éléments d'armure 29 parallèlement à l'axe X-X' de l'embout 14.

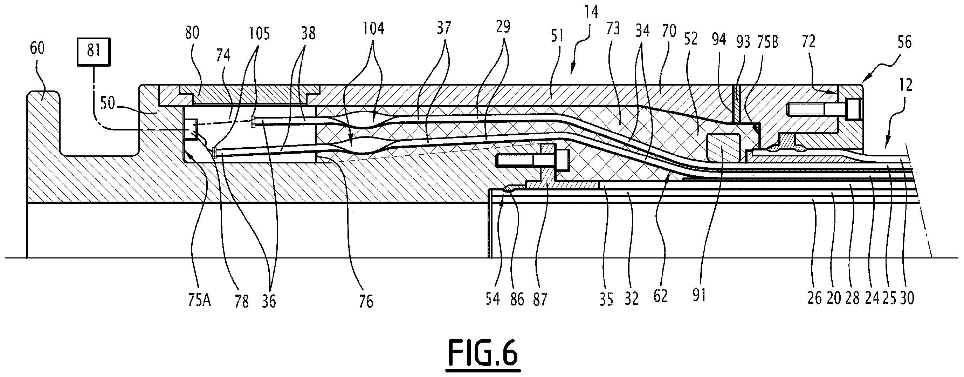

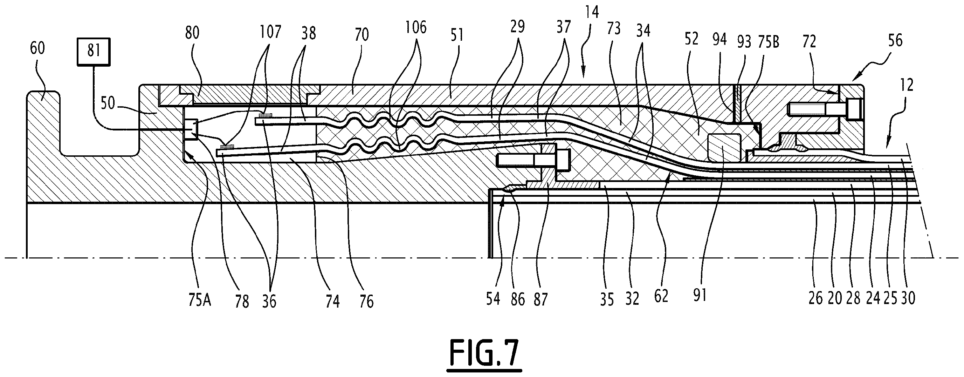

Un capteur ultrasonore comprend, notamment, un transducteur piézoélectrique ou magnétostrictif permettant de générer et/ou de détecter des ondes ultrasonores et utilisé pour effectuer un contrôle non destructif par échographie ultrasonore et/ou par émission acoustique. Lorsque le module de surveillance 78 comprend des capteurs ultrasonores, les capteurs ultrasonores sont avantageusement disposés dans la deuxième région 74 de la chambre de réception 56 pour émettre des ondes ultrasonores guidées dans des éléments d'armure 29. De tels capteurs ultrasonores détectent aussi en retour les ondes ultrasonores réfléchies dans les élément d'armure 29, ce qui permet notamment de détecter des défauts de corrosion ou des fissures de fatigue dans ces éléments d'armure. Une telle méthode d'échographie ultrasonore par ondes guidées permet d'inspecter des fils d'armures sur plusieurs dizaines de mètres, voire plus, depuis l'extrémité de l'embout 14. Le document WO2017/114942 décrit des capteurs ultrasonores permettant de générer et de mesurer des ondes guidées dans les fils d'armures, et qui peuvent convenir pour mettre en oeuvre la présente invention. En référence à la figure 7, selon une première variante, le capteur ultrasonore 107 est fixé sur une face latérale de l'extrémité libre 36 d'un élément d'armure 29. En référence à la figure 6, selon une deuxième variante, le capteur ultrasonore 105 est fixé sur la face d'extrémité de l'extrémité libre 36 d'un élément d'armure 29.

Un capteur à fibre optique est un capteur comprenant des fibres optiques permettant de mesurer des déformations, par exemple une fibre optique comportant au moins un réseau de Bragg. Lorsque le module de surveillance 78 comprend des capteurs à fibres optiques, ceux-ci sont avantageusement fixés d'une part aux extrémités libres 36 des éléments d'armure 29 et d'autre part sur la face arrière 75A de la voûte d'extrémité 50, ce qui permet de surveiller les déplacements relatifs des extrémités libres 36.

Un capteur magnétique permet de mesurer des variations de champ magnétique résultant du déplacement d'un aimant. Lorsque le module de surveillance 78 comprend des capteurs magnétiques, chaque extrémité des éléments d'armure 29 de chaque couche d'armures 24, 25 située dans la deuxième région 74 de la chambre de réception 52 est collée à un aimant permanent ou est aimantée. Des capteurs magnétiques du type capteur à effet Hall ou magnétodiode ou magnétorésistance permettent alors de mesurer des déplacements des éléments d'armure.

Un réflectomètre électrique dans le domaine temporel TDR (abréviation de l'anglais *Time-Domain Reflectometer*) ou dans le domaine fréquentiel FDR (abréviation de l'anglais *Frequency-Domain Reflectometer*) permet de caractériser les propriétés électriques d'un câble électrique dans une large bande fréquentielle, notamment son impédance, et permet de détecter et de localiser des éventuelles discontinuités, notamment des ruptures partielles ou totales des conducteurs électriques. Lorsque la conduite 2 comporte des couches anti-usure 13, les deux bornes du réflectomètre électrique sont avantageusement branchées d'une part à la couche interne d'armures 24 et d'autre part à la couche externe d'armures 25. En effet, les couches anti-usure 13 en matériau polymérique constituent des isolants électriques qui isolent électriquement chaque couche d'armure des autres couches métalliques. Par suite, les deux couches d'armure 24, 25 sont isolées l'une de l'autre, ce qui peut être mis à profit pour brancher ces deux couches aux deux bornes du réflectomètre électrique. Cette solution permet de détecter et de localiser non seulement des ruptures éventuelles des éléments d'armure 29, mais aussi une inondation accidentelle de l'espace annulaire entre la gaine de pression 20 et la gaine externe 30. Le document WO2011/027154 décrit des réflectomètres électriques TDR et FDR qui peuvent convenir pour mettre en oeuvre la présente invention. Les réflectomètres FDR sont assimilables à des analyseurs d'impédance avec balayage en fréquence.

Lorsque le module de surveillance 78 comprend un analyseur d'impédance, l'analyseur d'impédance est avantageusement disposé dans la deuxième région 74 de la chambre de réception 56.

Un capteur de détection de gaz permet notamment de détecter des gaz corrosifs du type sulfure d'hydrogène (H2S) et dioxyde de carbone (CO2) et d'en mesurer la concentration dans la deuxième région 74. Un capteur de détection de liquide permet notamment de détecter la présence d'eau et de mesurer le taux d'humidité dans la deuxième région 74. Ces mesures d'humidité et de concentration en gaz corrosif permettent notamment d'estimer le risque de corrosion des couches d'armures 24, 25.

En référence aux figures 2 à 19, l'ensemble avant d'étanchéité 54 est situé à l'avant de l'embout 14, en contact avec la voûte d'extrémité 50.

De manière connue, il comporte une bague avant 86 de sertissage, destinée à venir en prise sur la gaine de pression 20, et une bride de sertissage 87.

Le serrage de la bride 87 contre la voûte 50 déforme radialement la bague avant 86 de sertissage, de sorte que cette dernière vienne en prise radialement sur la gaine de pression 20.

L'ensemble arrière d'étanchéité 56 est placé à l'arrière de l'ensemble avant d'étanchéité 54. L'ensemble arrière d'étanchéité 56 comporte au moins une bague arrière de sertissage 88 sertissant la gaine externe 30, et une bride arrière 90 de serrage de la bague arrière 88, fixée sur le capot 51.

Les modes de réalisation dans lesquels les extrémités libres 36 des éléments d'armure 29 débouchent dans la deuxième région 74 sont particulièrement avantageux pour instrumenter les couches d'armures 24, 25 avec des capteurs qui ne peuvent fonctionner que lorsqu'ils sont en contact direct avec les éléments d'armure, comme par exemple des capteurs ultrasonores d'échographie en ondes guidées. Ces modes de réalisation facilitent aussi les branchements électriques entre les extrémités libres 36 et le module de surveillance 81, par exemple les branchements à un réflectomètre électrique ou à un analyseur d'impédance.

En pratique, les modes de réalisation particulièrement avantageux sont ceux dans lesquels le moyen d'ancrage de chaque tronçon d'extrémité 34 dans le matériau de remplissage de la première région 73 n'interrompt pas la continuité du tronçon d'extrémité qui peut alors être prolongé jusqu'à la deuxième région 74. En référence à la figure 2, un premier moyen d'ancrage répondant à ce critère est une saillie radiale 39 réalisée par soudage, brasage ou collage d'une pièce augmentant localement la section transverse de l'élément d'armure 29. En référence à la figure 5, un deuxième moyen d'ancrage répondant à ce critère est un double pliage 92 de chaque tronçon d'extrémité 34. Ce double pliage en forme de S consiste en un première pliage à 180° dans un sens suivi immédiatement d'un deuxième pliage à 180° dans le sens opposé. En référence aux figures 6 et 8 à 12, un troisième moyen d'ancrage répondant à ce critère est une torsade 104 réalisé en déformant localement l'élément d'armure 29 selon une méthode décrite dans le document WO99/19655. En référence aux figures 7 et 13 à 19, un quatrième moyen d'ancrage répondant à ce critère est une vague 106 réalisé en déformant localement l'élément d'armure 29 pour lui donner la forme d'une vague.

Le procédé de fabrication de l'embout 14 de connexion de la ligne flexible 2 va maintenant être décrit.

Initialement, d'une manière connue, le capot 51 est engagé autour de la gaine externe 30 du tronçon central 12. L'extrémité de la gaine externe 30 est dénudée pour faire apparaître les éléments d'armure 29, à l'avant du capot 51. Les éléments d'armure 29 sont alors déplacés pour permettre la mise en place de la voûte 50 et de l'ensemble avant d'étanchéité 54 sur la gaine de pression 20.

Les éléments d'armure 29 sont ensuite déplacés vers l'avant pour reposer sur la voûte 50.

Les tronçons d'extrémités 34 des éléments d'armure 29 sont découpés avant leur déplacement vers l'avant pour que les extrémités libres 36 des tronçons d'extrémités 34 de chaque couche d'armures 24 intérieure soient décalées vers l'avant par rapport aux extrémités libres 36 des tronçons d'extrémités 34 de chaque couche d'armures 25 extéLe capot 51 est, ensuite, positionné en regard des tronçons d'extrémités 34 et est assemblé sur la voûte 50. Une chambre de réception 52 contenant les tronçons d'extrémité 34 est ainsi formée.

Le procédé de fabrication comprend ensuite la coulée du matériau de remplissage dans une première région 73 de la chambre de réception 52, sans remplir la deuxième région 74. Cette étape de coulée peut se faire selon plusieurs méthodes.

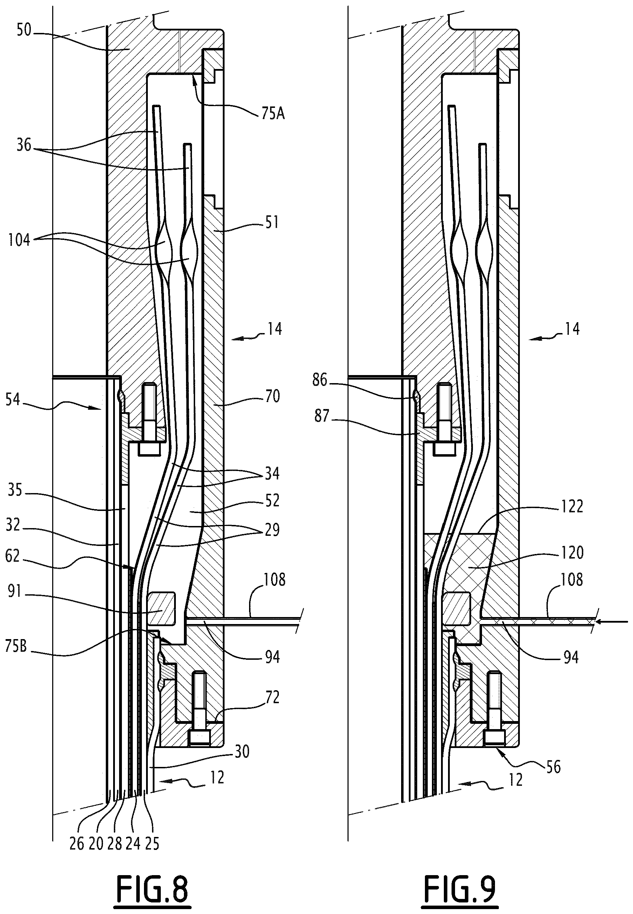

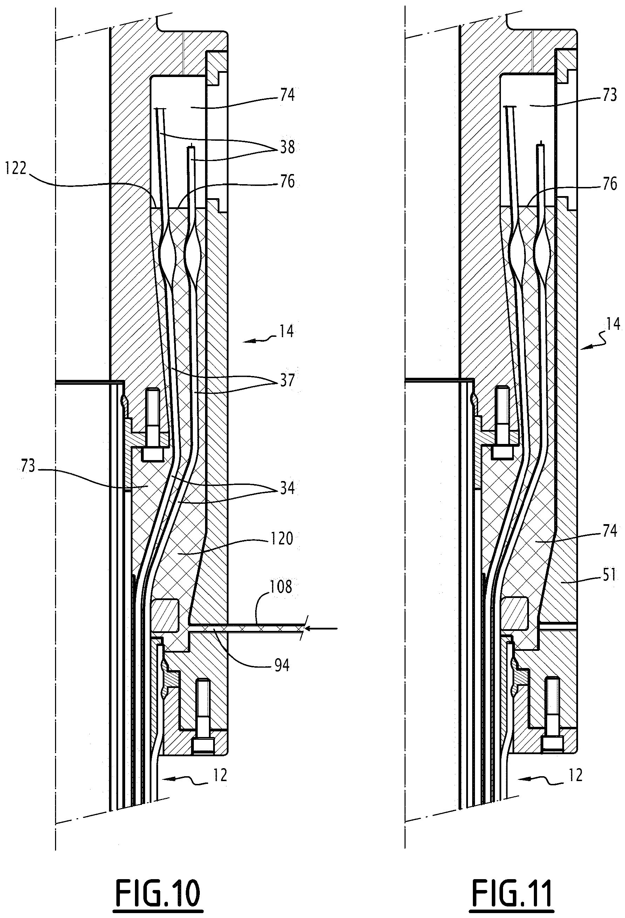

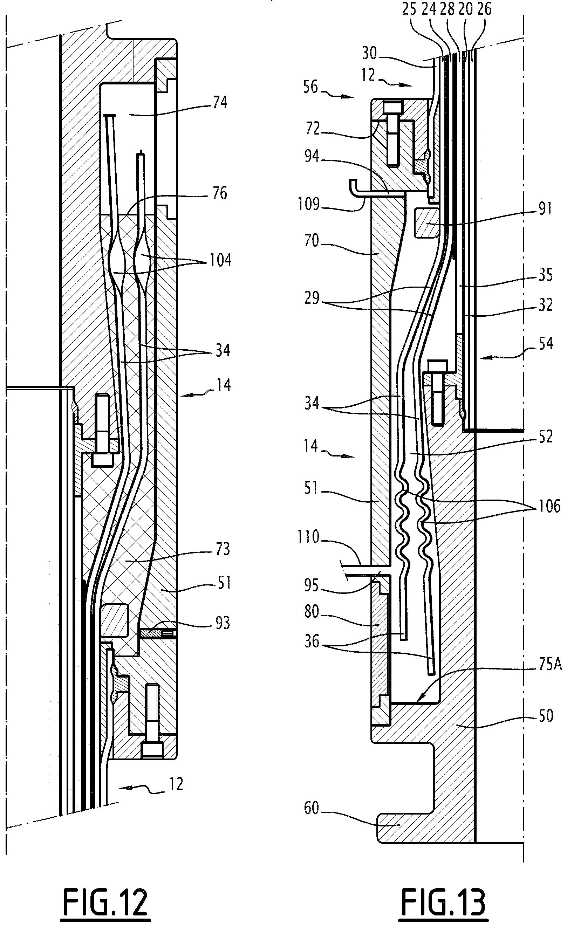

Une première méthode de coulée du matériau de remplissage est représentée sur les figures 8 à 12. L'embout 14 est mis à la verticale, l'axe central X-X' étant sensiblement vertical, la partie avant de l'embout 14 et la bride de fixation 60 étant disposés en position haute tandis que la partie arrière de l'embout 14 est disposé en partie basse. Le capot 51 comporte un orifice arrière 94 de coulée sur lequel on connecte des moyens 108 d'injection du matériau de remplissage, typiquement un tube d'injection (figure 8). Ensuite, on injecte sous pression le matériau de remplissage. Durant cette étape d'injection, le matériau de remplissage est à l'état liquide (figure 9). Le matériau de remplissage est avantageusement une résine thermodurcissable que l'on vient de mélanger avec un durcisseur chimique avant l'étape d'injection, de sorte que ce matériau reste liquide pendant le temps nécessaire pour effectuer la coulée et que sa solidification se produise plus tard. Le matériau de remplissage injecté par l'orifice arrière 94 remplit la chambre de réception 52 en remontant de la partie arrière vers la partie avant. Une fois que la surface supérieure 122 du matériau de remplissage a atteint le niveau souhaité correspondant à la limite entre la première région 73 et la deuxième région 74 (figure 10), l'injection est arrêtée. Le contrôle du niveau de remplissage de la chambre de réception peut se faire visuellement en regardant l'intérieur de l'embout par la trappe 80 qui est ouverte pendant cette étape. Ensuite, on attend que le matériau de remplissage soit solidifié, puis on retire les moyens d'injection (figure 11) avant de refermer l'orifice arrière 94 avec un bouchon arrière étanche 93 (figure 12). Cette première méthode de coulée est assez rapide mais présente l'inconvénient de nécessiter un travail en hauteur, du fait que la conduite flexible est située en partie basse de l'embout, ce qui oblige à relever l'embout par rapport au sol d'une valeur au moins égale au rayon minimum de courbure de la conduite, en pratique d'au moins 3 à 4 mètres.

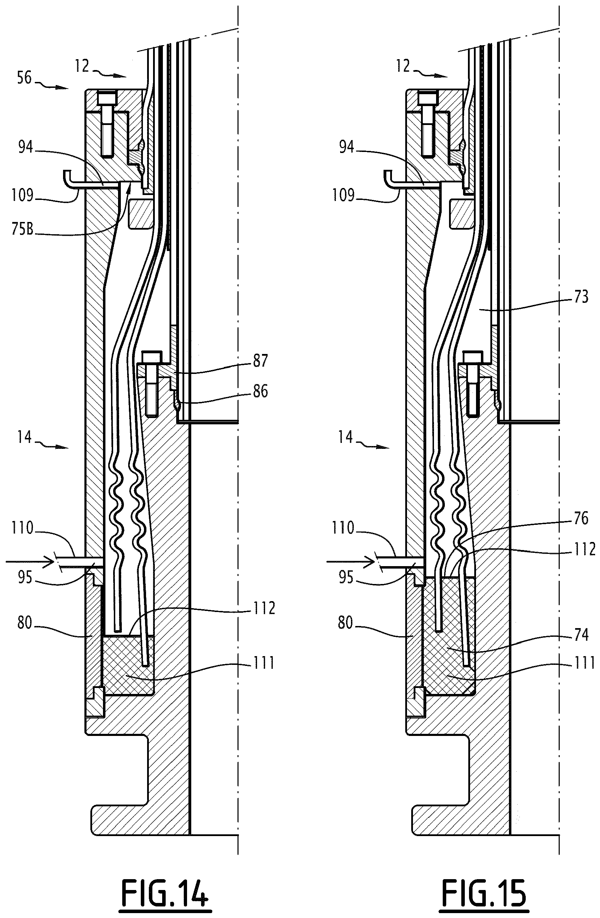

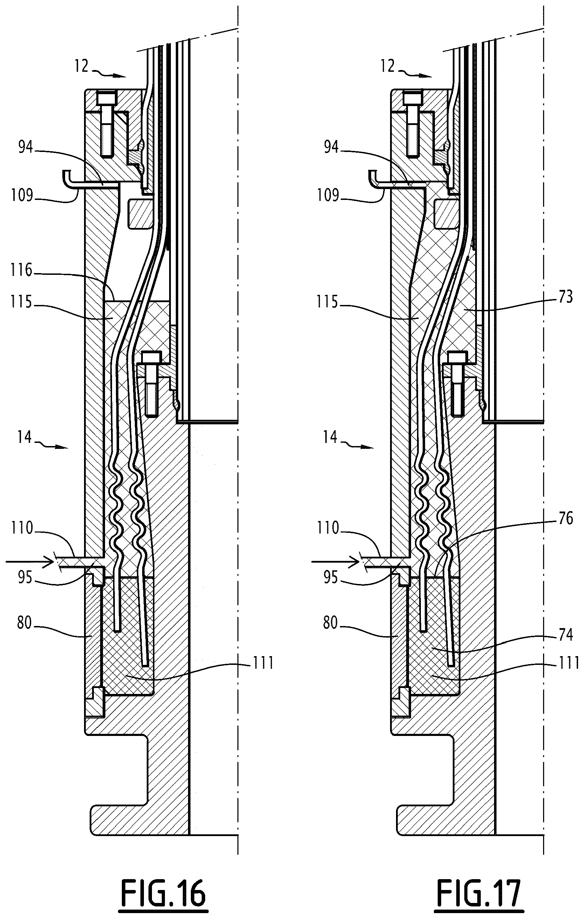

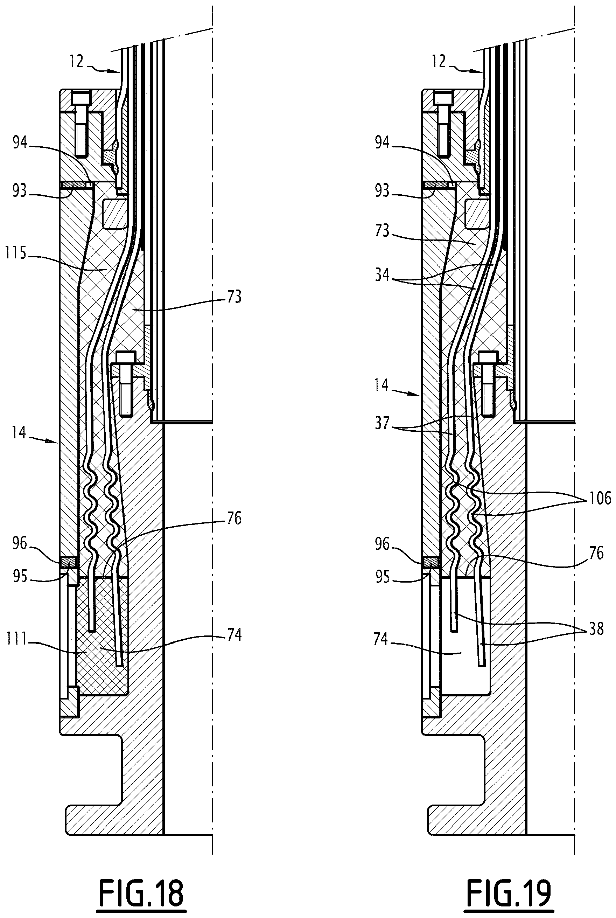

Une deuxième méthode de coulée du matériau de remplissage est représentée sur les figures 13 à 19. L'embout 14 est mis à la verticale, l'axe central X-X' étant sensiblement vertical, la partie avant de l'embout 14 et la bride de fixation 60 étant disposés en position basse tandis que la partie arrière de l'embout 14 est disposé en partie haute. Le capot 51 comporte un orifice avant 95 de coulée situé en face de la première région 73 juste à côté de la limite entre la première région 73 et la deuxième région 74. Le capot 51 comporte aussi un orifice arrière 94 d'évent situé à l'arrière de la chambre de réception 52. On ferme d'abord la trappe 80 et on équipe l'orifice avant 95 de moyens d'injection 110 (figure 13). Puis, à l'aide des moyens d'injection 110, on injecte par l'orifice avant 95 un matériau de moulage 111 du type par exemple d'un sable fin de moulage (figure 14) jusqu'à remplir totalement la deuxième région 74 (figure 15). Avantageusement, on fait vibrer l'embout 14 à l'aide d'un plateau vibrant (non représenté) afin que le matériau de moulage 111 se répartisse de façon homogène dans la deuxième région 74. Ensuite, à l'aide des moyens d'injection 110, on injecte sous pression par l'orifice avant 95 le matériau de remplissage à l'état liquide. Le matériau de remplissage est avantageusement une résine thermodurcissable que l'on vient de mélanger avec un durcisseur chimique avant l'étape d'injection, de sorte que ce matériau reste liquide pendant le temps nécessaire pour effectuer la coulée et que sa solidification se produise plus tard. Le matériau de remplissage injecté par l'orifice avant 95 remplit uniquement la première région 73 en remontant de l'avant vers l'arrière, car la présence du matériau de moulage 111 dans la deuxième région 74 empêche le matériau de remplissage de remplir la deuxième région 74 (figure 16). Une fois que la surface supérieure 116 du matériau de remplissage a atteint l'orifice arrière 94 (figure 17), l'injection est arrêtée. Ensuite, on attend que le matériau de remplissage soit solidifié, puis on retire les moyens d'injection, on referme l'orifice arrière 94 avec un bouchon arrière étanche 93, on referme l'orifice avant 95 avec un bouchon avant étanche 96, et on ouvre la trappe 80 (figure 18). Ensuite, on retire le matériau le matériau de moulage 111 par l'ouverture de la trappe 80 (figure 19). On utilise éventuellement un aspirateur relié à tube flexible d'aspiration pour retirer le matériau de moulage 111 dans les zones difficilement accessibles de la deuxième région 74.

Le module de surveillance 78 est ensuite disposé sur la voûte 50 en passant par l'ouverture de la trappe 80.

Le fonctionnement du système de suivi 82 de l'intégrité des éléments d'armure 29 de la conduite flexible 2 va maintenant être décrit.

La méthode de surveillance comprend la surveillance de chaque tronçon d'extrémité 34 des éléments d'armure de la conduite flexible 2 dans la deuxième région 74 de la chambre de réception 52 de la conduite flexible 2.

En particulier, lorsque le système de suivi 82 comprend une trappe 80 présentant une zone d'inspection visuelle transparente, la méthode comprend la visualisation par un plongeur ou par un robot mobile muni d'une caméra des extrémités des tronçons d'extrémité 34 situés dans la deuxième région 74 de la chambre de réception 52. Ceci permet de détecter d'éventuelles dégradations, des signes de vieillissement, par exemple de corrosion ou de fatigue, ou des mouvements anormaux des tronçons d'extrémité.

Lorsque le système de suivi 82 comprend un module de surveillance 78 dans la deuxième région 74 de la chambre de réception 52, la méthode comprend la mesure des déplacements, des efforts, des tensions et/ou des déformations des éléments d'armure 29 des couches d'armures internes 24 et externe 25 par le module de surveillance 78, ainsi que la détection de fissures dans les éléments d'armure 29 par le module de surveillance 78, ainsi que la détection d'inondation de l'espace annulaire de la conduite flexible 2 par le module de surveillance 78, ainsi que la détection de gaz ou de liquide dans la deuxième région 74 par le module de surveillance 78.

Le module de surveillance 78 communique alors les données mesurées avec l'unité de traitement 81. La méthode comprend, ensuite, la détermination par l'unité de traitement 81 d'éventuelles ruptures ou fragilités des éléments d'armure 29.

Ainsi, le système de suivi 82 selon l'invention permet de détecter en amont des signes de vieillissement, tels que la corrosion ou la fatigue ou d'éventuelles ruptures, au niveau de l'ancrage des éléments d'armure 29 dans l'embout 14, bien avant que ces ruptures ne se propagent et n'engendrent la destruction de l'embout 14.

De par sa localisation à l'avant de l'embout, le système de suivi 82 permet d'inspecter l'intégralité des couches d'armures 24, 25 aussi bien externes, qu'internes. En effet, les extrémités des tronçons d'extrémités des éléments d'armure 29 de chaque couche d'armures 24, 25 sont décalées les unes par rapport aux autres dans la deuxième région 74 de la chambre de réception 52.

En outre, la chambre de réception 52 est aménagée pour permettre la disposition d'un module de surveillance 78, et en particulier de capteurs, dans la deuxième région 74 dépourvue de matériau de remplissage. Ceci assure le bon fonctionnement des capteurs et permet éventuellement leur remplacement.

Enfin, la conception de la chambre de réception 52 est indépendante de la structure de l'ancrage de la conduite flexible dans l'embout 14. Le système de suivi 82 tel que décrit dans l'invention est donc applicable à tous types d'embouts 14.

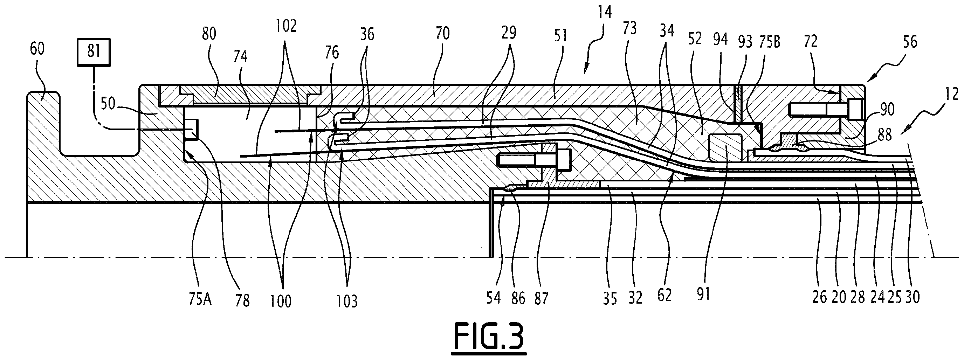

Selon un deuxième mode de réalisation tel que visible sur la figure 3, les éléments identiques à l'embout 14 selon le premier mode de réalisation décrit en regard de la figure 2 ne sont pas répétés. Seules les différences sont mises en évidence.

L'extrémité libre 36 de chaque tronçon d'extrémité se termine par un crochet. Les éléments d'armure sont ancrés dans la première région 73 de la chambre de réception 52 mais ne font pas saillie dans la deuxième région 74 de la chambre 52. Le crochet assure l'ancrage des éléments d'armure 29 dans le matériau de remplissage de la première région 73 de la chambre de réception 52.

Chaque élément d'armure 29 comprend, en outre, un module de raccordement 100 de l'élément d'armure 29 à la deuxième région 74 de la chambre de réception 52.

Le module de raccordement 100 comprend, par exemple, des fils 102 raccordés aux extrémités libres 36 des tronçons d'extrémité 34 dans la première région 73 et faisant saillie dans la deuxième région 74 de la chambre 52. Les fils 102 sont, par exemple, en un matériau conducteur par exemple en cuivre, ou encore en acier. La longueur minimale de chaque fil 100 dans la deuxième région 74 de la chambre de réception est de 5 cm. Les extrémités des fils 102 de chaque élément d'armure 29 sont décalées suivant l'axe central X-X' par rapport aux extrémités des fils 102 des éléments d'armure 29 des autres couches d'armures 24, 25 dans la deuxième région 74 de la chambre de réception 52. Les déplacements, tensions et déformations des éléments d'armure 29 sont transmises au module de raccordement 100. L'intégrité des éléments d'armure 29 est ainsi suivie au moyen du module de raccordement 100. Le décalage des fils 102 les uns par rapport aux autres permet de surveiller l'intégrité des couches internes 24 de la conduite flexible 2.

Lorsque le système de suivi 82 présente un module de surveillance 78, les éventuels capteurs du module de surveillance 78 sont raccordés aux fils 102 et non pas directement aux éléments d'armure 29.

Le procédé de fabrication de l'embout 14 selon le deuxième mode de réalisation illustré en figure 3 est identique au procédé de fabrication de l'embout 14 selon le premier mode de réalisation illustré en figure 2, à la différence qu'un module de raccordement 100 est raccordé aux éléments d'armure 29 avant l'introduction du matériau de remplissage.

Le fonctionnement du système de suivi 82 de l'intégrité des éléments d'armure 29 selon le deuxième mode de réalisation est identique au fonctionnement du système selon le premier mode de réalisation.

Ce deuxième mode de réalisation est particulièrement avantageux lorsque le module de surveillance 78 est un réflectomètre ou analyseur d'impédance dont les deux bornes de mesure sont branchées d'une part à la couche interne d'armures 24 et d'autre part à la couche externe d'armures 25, ces branchements se faisant par l'intermédiaire d'un module de raccordement 100 comportant des fils 102 en matériau présentant une bonne conductivité électrique ; par exemple en cuivre.

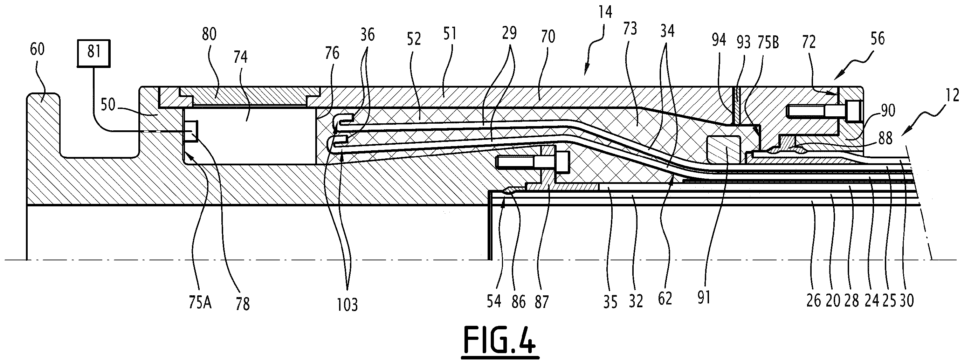

Selon un troisième mode de réalisation tel que visible sur la figure 4, les éléments identiques à l'embout 14 selon le premier mode de réalisation décrit en regard de la figure 2 ne sont pas répétés. Seules les différences sont mises en évidence.

L'extrémité libre 36 de chaque tronçon d'extrémité se termine par un crochet permettant d'assurer l'ancrage des éléments d'armure 29 dans le matériau de remplissage de la première région 73 de la chambre de réception 52. Les éléments d'armure 29 sont ancrés dans la première région 73 de la chambre de réception 52 remplie de matériau de remplissage. Ils ne font pas saillie dans la deuxième région 74 de la chambre 52.

La deuxième région 74 de la chambre de réception 52 contient le module de surveillance 78. Le module de surveillance 78 comprend dans ce cas un capteur magnétique et/ou inductif propre à mesurer sans contact le déplacement des éléments d'armure 29 métalliques dans la première région 73. En effet le matériau de remplissage dans la première région est généralement une résine polymérique non conductrice et amagnétique. Par suite un capteur inductif (capteur courants de Foucault, ou « Eddy current sensor » en langue anglaise) peut être utilisé pour mesurer sans contact à travers la résine polymérique la distance séparant le capteur des éléments d'armures 29 lorsque ces derniers sont constitués d'un matériau conducteur, par exemple un acier au carbone, un acier inoxydable ou encore un matériau composite conducteur du type fibres de carbone. De plus, lorsque les éléments d'armures 29 sont constitués d'un matériau magnétique, par exemple un acier au carbone ferromagnétique, un capteur magnétique peut être utilisé pour mesurer sans contact à travers la résine polymérique la distance séparant le capteur des éléments d'armures 29. Un capteur magnétique comporte des moyens de génération d'un champ magnétique constant, généralement au moins un aimant permanent, ainsi que des moyens de mesure du champ magnétique, généralement au moins un capteur à effet Hall et/ou au moins une magnétodiode et/ou au moins une magnétorésistance. Les moyens de génération d'un champ magnétique constant sont avantageusement installés dans la deuxième région 74, mais il serait aussi possible de les disposer dans la première région 73, par exemple en collant des aimants permanent contre les éléments d'armures 29 ou encore en magnétisant préalablement les éléments d'armures 29.

Le procédé de fabrication de l'embout 14 selon le troisième mode de réalisation illustré en figure 4 est identique au procédé de fabrication de l'embout 14 selon le premier mode de réalisation illustré en figure 2, à la différence que les éléments d'armure 29 ne font pas saillie dans la deuxième région 74 de la chambre de réception 52.

Le fonctionnement du système de suivi 82 de l'intégrité des éléments d'armure 29 selon le troisième mode de réalisation est assuré par le module de surveillance 78 dans la deuxième région 74, en interaction avec l'unité de traitement de données 81, en détectant à distance les mouvements éventuels de chaque élément d'armure 29 dans la première région 73.

Avantageusement l'embout 14 comporte plusieurs trappes 80, par exemple, trois trappes disposées à 120 degrés ou 4 trappes disposées à 90°

En variante ou en complément, l'embout 14 est aussi utilisé pour connecter des moyens de chauffage électrique de la conduite 2 destinés à éviter la formation de bouchons d'hydrate ou de paraffine. Dans ce cas, la deuxième région 74 est utilisée pour raccorder électriquement les éléments d'armure 29 à un générateur électrique, afin de faire circuler un courant électrique dans les couches d'armures 24, 25 pour chauffer par effet Joule la conduite 2.

## Revendications

1. Embout (14) de connexion d'une ligne flexible (2) de transport de fluide, la ligne flexible (2) comportant au moins une gaine tubulaire (20) et au moins une couche d'armures de traction (24, 25) disposée extérieurement par rapport à la gaine tubulaire (20), la couche d'armures (24, 25) comprenant une pluralité d'éléments d'armure filiformes (29), l'embout (14) comportant :
- au moins un tronçon d'extrémité (34) de chaque élément d'armure (29) ;
- une voûte d'extrémité (50) d'axe central (X-X') et un capot (51) fixé sur la voûte d'extrémité (50), la voûte d'extrémité (50) et le capot (51) délimitant entre eux une chambre de réception (52) de chaque tronçon d'extrémité (34) ;
**caractérisé en ce que** la chambre de réception (52) comporte une première région d'ancrage (73) de chaque tronçon d'extrémité (34) et une deuxième région de surveillance ou de branchement (74) de chaque tronçon d'extrémité (34) disposée à l'avant, plus proche d'une extrémité de la ligne flexible (2) que la première région (73), et ouverte sur la première région (73), chaque tronçon d'extrémité (34) étant ancré dans la première région (73), la première région (73) de la chambre de réception (52) étant remplie d'un matériau de remplissage et la deuxième région (74) de la chambre de réception (52) étant remplie d'un gaz.

2. Embout (14) selon la revendication 1, dans lequel la deuxième région (74) comprend un module de surveillance (78) de chaque tronçon d'extrémité (34), le module de surveillance (78) étant raccordé à une unité de traitement (81) des données en provenance du module de surveillance (78), le module de surveillance (78) comprenant, de préférence, au moins un élément choisi parmi une caméra, un capteur de mesure de déplacements, un capteur ultrasonore, un capteur à fibres optiques, un capteur magnétique, un réflectomètre électrique, un analyseur d'impédance et un capteur de détection de gaz et/ou de liquide

3. Embout (14) selon la revendication 2, dans lequel la voûte d'extrémité (50) ou le capot (51) comporte une trappe d'introduction et/ou de remplacement du module de surveillance (78).

4. Embout (14) selon l'une quelconque des revendications précédentes, dans lequel le capot (51) comporte une trappe amovible (80) faisant face à la deuxième région (74) de la chambre de réception (52).

5. Embout (14) selon l'une quelconque des revendications précédentes, dans lequel chaque tronçon d'extrémité (34) fait saillie dans la deuxième région (74) de la chambre de réception (52).

6. Embout (14) selon la revendication 5, dans lequel la ligne flexible (2) comporte au moins deux couches d'armures (24, 25), les extrémités des tronçons d'extrémité (34) de chaque couche d'armures (24, 25) étant décalées par rapport aux tronçons d'extrémité (34) des autres couches d'armures (24, 25) dans la deuxième région (74) de la chambre de réception (52) suivant l'axe central (X-X').

7. Embout (14) selon l'une quelconque des revendications 5 ou 6, dans lequel la longueur minimale de chaque tronçon d'extrémité (34) dans la deuxième région (74) est de 1 centimètre, préférentiellement 5 centimètres.

8. Embout (14) selon l'une quelconque des revendications 1 à 4, dans lequel chaque tronçon d'extrémité (34) est situé dans la première région d'ancrage (73) sans faire saillie dans la deuxième région (74), l'embout comprenant, de préférence, un module de raccordement (100) raccordé à chaque tronçon d'extrémité (34) dans la première région (73) et faisant saillie dans la deuxième région (74).

9. Embout (14) selon l'une quelconque des revendications précédentes, dans lequel la deuxième région (74) comprend des moyens de chauffage électrique de la conduite (2), au moins un tronçon d'extrémité (34) d'un élément d'armure (29) étant raccordé électriquement aux moyens de chauffage de sorte à faire circuler un courant électrique dans ledit élément d'armure (29) pour chauffer la conduite (2).

10. Procédé de fabrication d'un embout (14) de connexion d'une ligne flexible (2) de transport de fluide, la ligne flexible (2) comportant au moins une gaine tubulaire (20) et au moins une couche d'armures de traction (24, 25) disposée extérieurement par rapport à la gaine tubulaire (20), la couche d'armures (24, 25) comprenant une pluralité d'éléments d'armure filiformes (29), le procédé comportant les étapes suivantes :
- montage d'un embout (14) de connexion comportant au moins un tronçon d'extrémité (34) de chaque élément d'armure (29), une voûte d'extrémité (50) d'axe central (X-X') et un capot (51) fixé sur la voûte d'extrémité (50), la voûte d'extrémité (50) et le capot (51) délimitant entre eux une chambre de réception (52) de chaque tronçon d'extrémité (34),
- remplissage de la chambre de réception (52), pour remplir une première région (73) de la chambre de réception (52) avec un matériau de remplissage afin d'ancrer les tronçons d'extrémité (34) dans la première région (73) de la chambre de réception (52), la chambre de réception (52) comportant une deuxième région de surveillance ou de branchement (74) de chaque tronçon d'extrémité (34), la deuxième région (74) étant dépourvue de matériau de remplissage, disposée à l'avant de la première région (73) et ouverte sur la première région (73), la deuxième région (74) étant remplie d'un gaz.

11. Procédé selon la revendication 10, dans lequel le remplissage de l'embout s'effectue en maintenant l'embout (14) vertical ou incliné par rapport à l'horizontale.

12. Procédé selon la revendication 11, dans lequel le capot (51) comporte un orifice arrière (94) de coulée propre à être connecté à des moyens d'injection (108) d'un matériau de remplissage, l'étape de remplissage étant effectuée lorsque l'embout (14) est maintenu vertical et lorsque la partie avant de l'embout (14) est disposée en position haute et la partie arrière de l'embout (14) est disposée en position basse, l'étape de remplissage comprenant l'injection d'un matériau de remplissage dans la chambre de réception (52) via l'orifice arrière (94) de sorte à remplir la première région (73) du matériau de remplissage.

13. Procédé selon la revendication 11, dans lequel le capot (51) comporte un orifice avant (95) de coulée propre à être connecté à des moyens d'injection (110) d'un matériau de remplissage et d'un matériau de moulage, l'étape de remplissage étant effectuée lorsque l'embout (14) est maintenu vertical et lorsque la partie avant de l'embout (14) est disposée en position basse et la partie arrière de l'embout (14) est disposée en position haute, l'étape de remplissage comprenant :
- l'injection d'un matériau de moulage (111) dans la chambre de réception (52) via l'orifice avant (95) de sorte à remplir la deuxième région (74) du matériau de moulage (111),
- l'injection d'un matériau de remplissage dans la chambre de réception (52) via l'orifice avant (95) de sorte à remplir la première région (74) du matériau de remplissage, et
- le retrait du matériau de moulage (111) de la deuxième région (74).

14. Méthode de surveillance d'un embout (14) de connexion d'une ligne flexible (2) de transport de fluide, la ligne flexible (2) comportant au moins une gaine tubulaire (20) et au moins une couche d'armures de traction (24, 25) disposée extérieurement par rapport à la gaine tubulaire (20), la couche d'armures (24, 25) comprenant une pluralité d'éléments d'armure filiformes (29), le procédé comprenant :
- la fourniture d'un embout (14) selon l'une quelconque des revendications 1 à 9, et
- la surveillance, dans la deuxième région (74) de la chambre de réception (52), de chaque tronçon d'extrémité (34).

## Patentansprüche

1. Anschlussstück (14) zum Verbinden einer flexiblen Leitung (2) zum Fluidtransport, die flexible Leitung (2) umfassend mindestens einen rohrförmigen Mantel (20) und mindestens eine Zugbewehrungsschicht (24, 25), die in Bezug auf den rohrförmigen Mantel (20) außen angeordnet ist, die Bewehrungsschicht (24, 25) umfassend eine Vielzahl von fadenförmigen Bewehrungselementen (29), das Anschlussstück (14) umfassend:
- mindestens einen Endabschnitt (34) von jedem Bewehrungselement (29);
- eine Endwölbung (50) der Mittelachse (X-X') und eine Haube (51), die an der Endwölbung (50) befestigt ist, wobei die Endwölbung (50) und die Haube (51) untereinander eine Aufnahmekammer (52) von jedem Endabschnitt (34) begrenzen,
**dadurch gekennzeichnet, dass** die Aufnahmekammer (52) einen ersten Verankerungsbereich (73) von jedem Endabschnitt (34) und einen zweiten Verankerungsbereich (74) von jedem Endabschnitt (34), der vorne, näher an einem Ende der flexiblen Leitung (2) als der erste Bereich (73), angeordnet und an dem ersten Bereich (73) offen ist, wobei jeder Endabschnitt (34) in dem ersten Bereich (73) verankert ist, wobei der erste Bereich (73) der Aufnahmekammer (52) mit einem Füllmaterial gefüllt ist und der zweite Bereich (74) der Aufnahmekammer (52) mit einem Gas gefüllt ist.

2. Anschlussstück (14) nach Anspruch 1, wobei der zweite Bereich (74) ein Überwachungsmodul (78) von jedem Endabschnitt (34) umfasst, wobei das Überwachungsmodul (78) mit einer Verarbeitungseinheit (81) von Daten verbunden ist, die von dem Überwachungsmodul (78) stammen, das Überwachungsmodul (78) vorzugsweise umfassend mindestens ein Element umfasst, das ausgewählt ist aus einer Kamera, einem Sensor zum Messen von Verschiebungen, einem Ultraschallsensor, einem faseroptischen Sensor, einem Magnetsensor, einem elektrischen Reflektometer, einem Impedanzanalysator und einem Sensor zur Erkennung von Gas und/oder Flüssigkeit.

3. Anschlussstück (14) nach Anspruch 2, wobei die Endwölbung (50) oder die Haube (51) eine Klappe zum Einführen und/oder Ersetzen des Überwachungsmoduls (78) umfasst.

4. Anschlussstück (14) nach einem der vorherigen Ansprüche, wobei die Haube (51) eine abnehmbare Klappe (80) umfasst, die dem zweiten Bereich (74) der Aufnahmekammer (52) zugewandt ist.

5. Anschlussstück (14) nach einem der vorherigen Ansprüche, wobei jeder Endabschnitt (34) in den zweiten Bereich (74) der Aufnahmekammer (52) hervorsteht.

6. Anschlussstück (14) nach Anspruch 5, wobei die flexible Leitung (2) mindestens zwei Bewehrungsschichten (24, 25) umfasst, wobei die Enden der Endabschnitte (34) von jeder Bewehrungsschicht (24, 25) in Bezug auf Endabschnitte (34) anderer Bewehrungsschichten (24, 25) in dem zweiten Bereich (74) der Aufnahmekammer (52) entlang der Mittelachse (X-X') versetzt sind.

7. Anschlussstück (14) nach einem der Ansprüche 5 oder 6, wobei die Mindestlänge von jedem Endabschnitt (34) in dem zweiten Bereich (74) 1 cm, vorzugsweise 5 cm, ist.

8. Anschlussstück (14) nach einem der Ansprüche 1 bis 4, wobei sich jeder Endabschnitt (34) in dem ersten Verankerungsbereich (73) befindet, ohne in den zweiten Bereich (74) hervorzustehen, das Anschlussstück vorzugsweise umfassend ein Verbindungsmodul (100), das mit jedem Endabschnitt (34) in dem ersten Bereich (73) verbunden ist und in den zweiten Bereich (74) hervorsteht.

9. Anschlussstück (14) nach einem der vorherigen Ansprüche, wobei der zweite Bereich (74) Einrichtungen zum elektrischen Heizen der Leitung (2) umfasst, wobei ein Endabschnitt (34) eines Bewehrungselements (29) elektrisch mit den Heizeinrichtungen verbunden ist, um einen elektrischen Strom in dem Bewehrungselement (29) fließen zu lassen, um die Leitung (2) zu beheizen.

10. Herstellungsverfahren eines Endstücks (14) zur Verbindung einer flexiblen Leitung (2) zum Fluidtransport, die flexible Leitung (2) umfassend mindestens einen rohrförmigen Mantel (20) und mindestens eine Zugbewehrungsschicht (24, 25), die in Bezug auf den rohrförmigen Mantel (20) außen angeordnet ist, die Bewehrungsschicht (24, 25) umfassend eine Vielzahl von fadenförmigen Bewehrungselementen (29), das Verfahren umfassend die folgenden Schritte:
- Montieren eines Anschlussstücks (14) zur Verbindung, umfassend mindestens einen Endabschnitt (34) von jedem Bewehrungselement (29), eine Endwölbung (50) mit einer Mittelachse (X-X') und eine Haube (51), die an der Endwölbung (50) befestigt ist, wobei die Endwölbung (50) und die Haube (51) untereinander eine Aufnahmekammer (52) von jedem Endabschnitt (34) begrenzen,
- Füllen der Aufnahmekammer (52), um einen ersten Bereich (73) der Aufnahmekammer (52) mit einem Füllmaterial zu füllen, um die Endabschnitte (34) in dem ersten Bereich (73) der Aufnahmekammer (52) zu verankern, die Aufnahmekammer (52) umfassend einen zweiten Überwachungs- oder Verzweigungsbereich (74) von jedem Endabschnitt (34), wobei der zweite Bereich (74) frei von Füllmaterial ist, vor dem ersten Bereich (73) angeordnet und zu dem ersten Bereich (73) hin offen ist, wobei der zweite Bereich (74) mit einem Gas gefüllt ist.

11. Verfahren nach Anspruch 10, wobei das Füllen des Anschlussstücks erfolgt, indem das Anschlussstück (14) senkrecht oder schräg in Bezug auf die Horizontale gehalten wird.

12. Verfahren nach Anspruch 11, wobei die Haube (51) eine hintere Gießöffnung (94) umfasst, die geeignet ist, um mit Einspritzeinrichtungen (108) eines Füllmaterials verbunden zu werden, wobei der Füllschritt durchgeführt wird, wenn das Anschlussstück (14) vertikal gehalten wird und wenn der vordere Abschnitt des Anschlussstücks (14) in der oberen Position angeordnet ist und der hintere Abschnitt des Anschlussstücks (14) in der unteren Position angeordnet ist, wobei der Füllschritt ein Einspritzen eines Füllmaterials in die Aufnahmekammer (52) durch die hintere Öffnung (94) umfasst, um den ersten Bereich (73) mit dem Füllmaterial zu füllen.

13. Verfahren nach Anspruch 11, wobei die Haube (51) eine vordere Gießöffnung (95) umfasst, die geeignet ist, um mit Einspritzeinrichtungen (110) eines Füllmaterials und eines Formmaterials verbunden zu sein, wobei der Füllschritt durchgeführt wird, wenn das Anschlussstück (14) vertikal gehalten wird und wenn der vordere Abschnitt des Anschlussstücks (14) in der unteren Position angeordnet ist und der hintere Abschnitt des Anschlussstücks (14) in der oberen Position angeordnet ist, der Füllschritt umfassend:
- Einspritzen eines Formmaterials (111) in die Aufnahmekammer (52) über die vordere Öffnung (95), um den zweiten Bereich (74) mit dem Formmaterial (111) zu füllen,
- Einspritzen eines Füllmaterials in die Aufnahmekammer (52) über die vordere Öffnung (95), um den ersten Bereich (74) mit dem Füllmaterial zu füllen, und
- Entfernen des Formmaterials (111) aus dem zweiten Bereich (74).

14. Überwachungsverfahren eines Anschlussstücks (14) einer flexiblen Leitung (2) zum Fluidtransport, die flexible Leitung (2) umfassend mindestens einen rohrförmigen Mantel (20) und mindestens eine Zugbewehrungsschicht (24, 25), die in Bezug auf den rohrförmigen Mantel (20) außen angeordnet ist, die Bewehrungsschicht (24, 25) umfassend eine Vielzahl von fadenförmigen Bewehrungselementen (29), das Verfahren umfassend:
- Bereitstellen eines Anschlussstücks (14) nach einem der Ansprüche 1 bis 9, und
- Überwachen des zweiten Bereichs (74) der Aufnahmekammer (52) von jedem Endabschnitt (34).

## Claims

1. A tip (14) for connecting a flexible fluid transport line (2), the flexible line (2) comprising at least one tubular sheath (20) and at least one layer of tensile armour (24, 25) disposed outside the tubular sheath (20), the layer of armour (24, 25) comprising a plurality of thread-like armour elements (29), the tip (14) comprising:
- at least one end section (34) of each armour element (29);
- an end cap (50) with a central axis (X-X') and a cover (51) fixed to the end cap (50), the end cap (50) and the cover (51) delimiting between them a chamber (52) for receiving each end section (34);
**characterised in that** the receiving chamber (52) comprises a first region (73) for anchoring each end section (34) and a second region (74) for monitoring or branching each end section (34) disposed at the front, closer to an end of the flexible line (2) than the first region (73), and open to the first region (73), each end section (34) being anchored in the first region (73), the first region (73) of the receiving chamber (52) being filled with a filling material and the second region (74) of the receiving chamber (52) being filled with a gas.

2. The tip (14) of claim 1, wherein the second region (74) comprises a module (78) for monitoring each end section (34), the monitoring module (78) being connected to a unit (81) for processing data from the monitoring module (78), the monitoring module (78) preferably comprising at least one element chosen from of a camera, a motion measurement sensor, an ultrasonic sensor, a fibre-optic sensor, a magnetic sensor, an electrical reflectometer, an impedance analyser and a gas and/or liquid detection sensor

3. The tip (14) according to claim 2, wherein the end cap (50) or the cover (51) has a hatch for inserting and/or replacing the monitoring module (78).

4. The tip (14) according to any one of the preceding claims, wherein the cover (51) comprises a removable hatch (80) facing the second region (74) of the receiving chamber (52).

5. The tip (14) according to any one of the preceding claims, wherein each end section (34) projects into the second region (74) of the receiving chamber (52).

6. The tip (14) according to claim 5, wherein the flexible line (2) comprises at least two armour layers (24, 25), the ends of the end sections (34) of each armour layer (24, 25) being offset from the end sections (34) of the other armour layers (24, 25) in the second region (74) of the receiving chamber (52) along the central axis (X-X').

7. The tip (14) according to any one of claims 5 or 6, wherein the minimum length of each end section (34) in the second region (74) is 1 centimetre, preferably 5 centimetres.

8. The tip (14) according to any one of claims 1 to 4, wherein each end section (34) is located in the first anchoring region (73) without projecting into the second region (74), the tip preferably comprising a connection module (100) connected to each end section (34) in the first region (73) and projecting into the second region (74).

9. The tip (14) according to any one of the preceding claims, wherein the second region (74) comprises means for electrically heating the pipe (2), at least one end section (34) of an armour element (29) being electrically connected to the heating means so as to cause an electrical current to flow through said armour element (29) to heat the pipe (2).

10. A method for manufacturing a tip (14) for connecting a flexible fluid transport line (2), the flexible line (2) comprising at least one tubular sheath (20) and at least one layer of tensile armour (24, 25) disposed outside the tubular sheath (20), the layer of armour (24, 25) comprising a plurality of thread-like armour elements (29), the method comprising the following steps:
- assembling a connection tip (14) comprising at least one end section (34) of each armour element (29), an end cap (50) with a central axis (X-X') and a cover (51) fixed to the end cap (50), the end cap (50) and the cover (51) delimiting between them a chamber (52) for receiving each end section (34),
- filling the receiving chamber (52), to fill a first region (73) of the receiving chamber (52) with a filling material in order to anchor the end sections (34) in the first region (73) of the receiving chamber (52), the receiving chamber (52) comprising a second region (74) for monitoring or branching each end section (34), the second region (74) being free of filler material and being arranged in the front of the first region (73) and open to the first region (73), the second region (74) being filled with a gas.

11. The method according to claim 10, wherein the filling of the tip is carried out by keeping the tip (14) vertical or inclined with respect to the horizontal.

12. The method according to claim 11, wherein the cover (51) has a rear pouring port (94) adapted to be connected to means for injecting (108) a filling material, the filling step being carried out when the tip (14) is held upright and when the front part of the tip (14) is disposed in a high position and the rear part of the tip (14) is disposed in a low position, the filling step comprising injecting a filling material into the receiving chamber (52) through the rear port (94) so as to fill the first region (73) with the filling material.

13. The method according to claim 11, wherein the cover (51) comprises a front pouring port (95) adapted to be connected to means for injecting (110) a filling material and a moulding material, the filling step being carried out when the tip (14) is held upright and when the front part of the tip (14) is disposed in a low position and the rear part of the tip (14) is disposed in a high position, the filling step comprising:
- injecting a moulding material (111) into the receiving chamber (52) via the front port (95) so as to fill the second region (74) with the moulding material (111),
- injecting a filler material into the receiving chamber (52) via the front port (95) so as to fill the first region (74) with the filler material, and
- removing the moulding material (111) from the second region (74).

14. A method for monitoring a tip (14) for connecting a flexible fluid transport line (2), the flexible line (2) comprising at least one tubular sheath (20) and at least one layer of tensile armour (24, 25) disposed outside the tubular sheath (20), the layer of armour (24, 25) comprising a plurality of thread-like armour elements (29), the method comprising:
- providing a tip (14) according to any one of the claims 1 to 9, and
- monitoring, in the second region (74) of the receiving chamber (52), each end section (34).
